# EUROPEAN PATENT SPECIFICATION

(11) **EP 1 078 188 B1**
(45) Date of publication and mention of the grant of the patent: **05.11.2003**
(21) Application number: 99920984.4
(22) Date of filing: 07.05.1999
(51) Int. Cl.: F16L 3/133

(54) **SUPPORT OF PIPES AND OTHER ELEMENTS FROM WALLS AND CEILINGS**
HALTEVORRICHTUNG AN WÄNDEN UND DECKEN FÜR ROHRE UND ÄHNLICHE ELEMENTE
PERFECTIONNEMENTS RELATIFS A LA FIXATION DE TUYAUX ET AUTRES ELEMENTS SUR DES PAROIS ET PLAFONDS

(30) Priority: 07.05.1998 GB 9809765
(43) Date of publication of application: 28.02.2001
(73) Proprietor: Leach, Bernard, Battle, East Sussex TN33 9DU (GB)
(72) Inventor: Leach, Bernard, Battle, East Sussex TN33 9DU (GB)
(74) Representative: Bailey, David Martin
(86) International application number: GB9901427
(87) International publication number: WO99057472

(56) References cited:
- EP-A- 0 118 584
- US-A- 4 641 989

## Description

The present invention relates to improvements in or relating to the support of pipes and other, typically, elongate elements from walls and ceilings, In particular, it relates to a hanger of particular use in suspending pipes and/or cables, especially in heating and air-conditioning installations and plumbing generally. Document EP-A-0 118 584 discloses such a pipe hanger.

Conventionally, in heating or air conditioning installations, pipes are typically suspended from a ceiling or floor-joists by means of a threaded drop rod which engages at its upper end a corresponding threaded coupling secured to the ceiling or joist and its lower end, a munsing ring - a two-part ring which can be closed once the pipe has been inserted. This method requires very accurate cutting to length of the threaded rod to ensure that the pipes run horizontally or with the desired incline.

Accordingly there is a need to provide an improved system of hanging pipework or other elements which avoids the need for accurate cutting of the threaded drop rods to length.

In its broadest sense, in one aspect, the present invention provides a pipe support device having a generally U-shaped channel for receipt, in use, of a pipe and including adjustable engagement means to receive and retain a threaded rod; the engagement means including a channel provided in a face of the support device, the channel being of similar cross-sectional dimensions to the threaded rod and including a lateral toothed ridge having a plurality of teeth which, in use, engage the thread of the rod to retain the rod in position within the channel.

In a further aspect the present invention provides a support system comprising a threaded socket including means for securing the socket to a surface; a complementarily threaded rod and a support of the type described above.

In a yet further aspect, the present invention provides a method of supporting a pipe from a threaded rod, the method including the steps of providing the object with a channel of similar cross-sectional dimensions as the threaded rod, which channel includes a lateral toothed ridge, having a plurality of teeth, which are selected to be of similar size and pitch to the thread of the rod.

The above and other aspects of the present invention will now be described in further details, by way of example only, with refer to the accompanying drawings, in which:

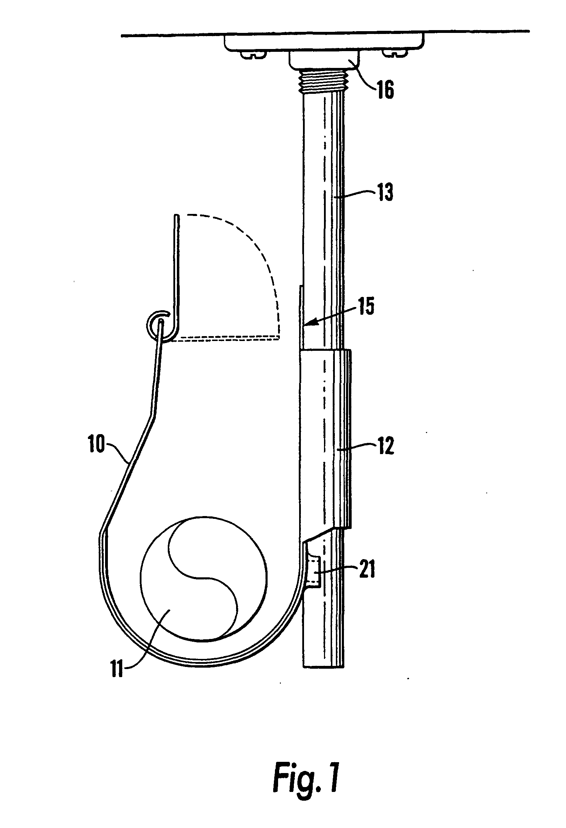

Figure 1 is a side view of an embodiment of a support device in accordance with the present invention;

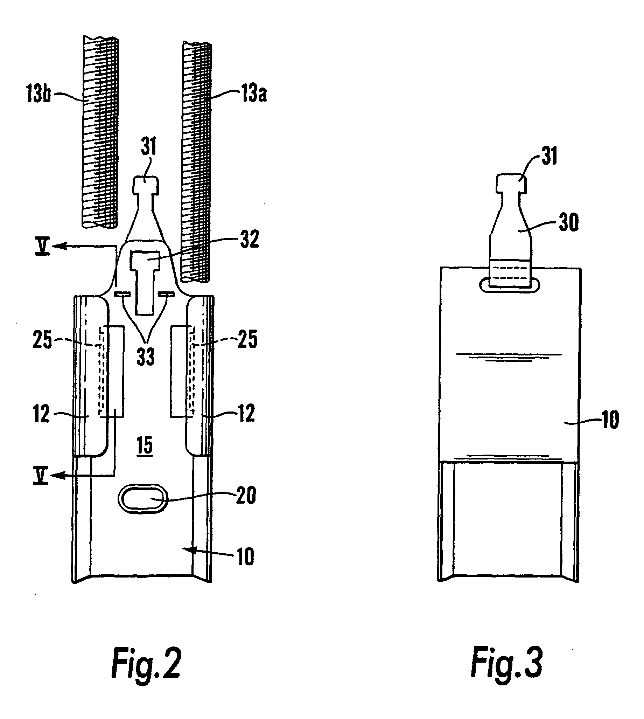

Figure 2 is a rear view of the embodiment of Figure 1;
Figure 3 is a front view of the embodiment of Figure 1;
Figure 4 is a plan view of the embodiment of Figure 1; and
Figure 5 is a section on the line V-V in Figure 2;

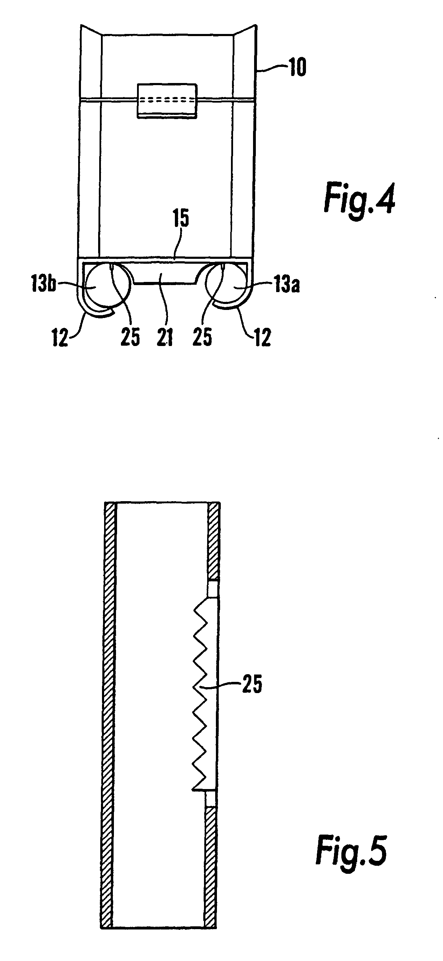

Referring to the figures, there is shown support device in the form of a pipe hanger 10 supporting a pipe 11 in cross-section. The pipe hanger 10, which can be bent from sheet metal, has a generally U-shaped form when viewed side-on. The hanger 10 includes two generally L-shaped elongate lugs 12 extending from and along-the rear face thereof. In use, these lugs form a channel with the back-plate 15 of the hanger to receive and engage a threaded drop rod 13 which is secured to the ceiling or a joist in a conventional manner, as shown, by means of a threaded socket 16 screwed to the ceiling. As shown, in the preferred embodiment, each channel is adapted to engage a rod of different diameter, such as 8mm (13a) or 10mm (13b). Obviously, only one channel need be used at any one time. As shown in Figure 4, the edges of the lugs 12 curve inwardly to securely engage the rod 12. In this preferred embodiment, an aperture 20 is punched in the metal sheet of the hanger such that the metal thereby caused to protrude from the rear face of the hanger forms a lip 21 against which, in use, the threaded rod 13 is pressed, to retain the rod laterally in position.

The hanger is provided with a lateral toothed ridge 25 associated with each channel and forming an additional short side wall to retain threaded rod 13. Typically each toothed ridge is formed by punching or otherwise forming the appropriate shape in the back-plate of the hanger and then bending backwardly to the form shown in the figures. The dimensions of the teeth of the ridge are selected to correspond to the pitch of the groove of the threaded rod. By this means, a rod is securely held in place within the hanger or conversely, the hanger is securely held upon the threaded rod.

The hanger 10 can be positioned at any height simply by clipping it onto the threaded rod 13 at the desired point. It no longer becomes necessary to cut the rod 13 to precisely the correct length.

In the embodiment shown, there is also provided a clip at the top of the hanger 10 to prevent the pipe 11 from being lifted vertically out of the hanger. The clip comprises a tongue 30 pivotally mounted upon the front upright of the hanger. The tongue 30 includes a lug 31 which, in use, locates in a corresponding keyhole aperture 32 within the back plate 15. As shown, in a preferred embodiment, the aperture 32 is provided within a portion of the back plate 15 which extends, in the form or a further tongue, above the main body of the hanger and is divided therefrom by perforations 33 forming a line of weakness. Once the tongue 30 of the clip has been located within the aperture and is pushed down to its lowest extent, the further tongue can be bent over along the line of weakness to retain the tongue 30 in position. In this position, lug 32 also acts to prevent sideways movement of the threaded rod.

As has been mentioned above, in air-conditioning and similar installations, condensation pipes must be accurately inclined to take the water to the lowest point in the installation. With the prior art supporting systems, this involves accurate cutting of the drop rods prior to installation. With the hangers of this invention, the hangers can be set approximately, the pipework can then be installed and the lengths of the drop rods 13 adjusted, if necessary, to ensure the correct inclination. The hangers typically provide sufficient room for two pipes and also for electrical cables as required.

Although described herein with respect to the suspension of pipes and cables, particularly in the context of heating and air-conditioning installation, the present invention is equally applicable to suspension of other articles. For example, hangers 10 can be used individually in much the same way as a conventional hook. The system will, accordingly, be suitable for a range of uses in the home, in shop-fitting and other industrial uses.

## Claims

1. A pipe support device (10) having a first generally U-shaped channel for receipt, in use, of a pipe (11) and including adjustable engagement means (12) to receive and retain a threaded rod (13); the engagement means including a second channel (12) provided in a face of the support device (10), this channel (12) being of similar cross-sectional dimensions to the threaded rod (13) and including a lateral toothed ridge (25) having a plurality of teeth which, in use, eogage the thread of the rod (13) to retain the rod (13) in position within the channel (12).

2. A support device (10) as claimed in Claim 1 wherein the adjustable engagement means comprise two channels (12) in the face of the device, each channel (12) being adapted to receive a threaded rod (13) of different cross section.

3. A support system comprising a threaded socket (16) including means for securing the socket to a surface; a complementarily threaded rod (13); and a support device as claimed in Claim 1 or Claim 2.

4. A method of supporting a pipe (11) from a threaded rod (13), the method including the steps of using a pipe support device according to claim 1 or claim 2 choosing a channel (12) of similar cross-sectional dimensions as the threaded rod (13), which channel includes a lateral toothed ridge (25), having a plurality of teeth, which are selected to be of similar size and pitch to the thread of the rod (13).

## Patentansprüche

1. Rohrhaltevorrichtung (10), die ein erstes, allgemein U-förmiges Profil hat, das bei Benutzung zur Aufnahme eines Rohres (11) dient, und die verstellbare Eingriffsmittel (12) zum Aufnehmen und Halten einer Gewindestange (13) aufweist; wobei die Eingriffsmittel ein zweites Profil (12) enthalten, das in einer Seitenfläche der Haltevorrichtung (10) vorgesehen ist, wobei dieses Profil (12) einen ähnlich dimensionierten Querschnitt wie die Gewindestange (13) besitzt und eine seitliche Zahnleiste (25) mit einer Mehrzahl von Zähnen aufweist, die bei Benutzung in das Gewinde der Stange (13) eingreifen, um die Stange (13) in ihrer Position in dem Profil (12) zu halten.

2. Haltevorrichtung (10) nach Anspruch 1, wobei die verstellbaren Eingriffsmittel zwei Profile (12) in der Seitenfläche der Vorrichtung umfassen, wobei jedes Profil (12) für die Aufnahme einer Gewindestange (13) eines anderen Durchmessers angepasst ist.

3. Haltesystem, umfassend einen Gewindesockel (16) mit Mitteln zum Befestigen des Sockels an einer Fläche; eine mit einem Komplementärgewinde versehene Stange (13); und eine Haltevorrichtung wie in Anspruch 1 oder Anspruch 2 angegeben.

4. Verfahren zum Stützen eines Rohres (11) ausgehend von einer Gewindestange (13), umfassend die Schritte des Verwendens einer Rohrhaltevorrichtung nach Anspruch 1 oder Anspruch 2, des Wählens eines Profils (12) mit einem ähnlich dimensionierten Querschnitt wie die Gewindestange (13), wobei das Profil eine seitliche Zahnleiste (25) mit einer Mehrzahl von Zähnen aufweist, die so gewählt sind, dass ihre Größe und Teilung ähnlich wie jene des Gewindes der Stange (13) sind.

## Revendications

1. Dispositif de support de tuyau (10) présentant un premier canal généralement en forme de U de réception, en utilisation, d'un tuyau (11) et comprenant des moyens de mise en prise réglables (12) pour recevoir et retenir une tige filetée (13) ; les moyens de mise en prise comprenant un second canal (12) proposé dans une face du dispositif de support (10) ; ce canal (12) étant de dimensions en coupe transversale similaires à la tige filetée (13) et comprenant une nervure dentée latérale (25) présentant une pluralité de dents qui, en utilisation, mettent en prise le filetage de la tige (13) afin de retenir la tige (13) en position à l'intérieur du canal (12).

2. Dispositif de support (10) selon la revendication 1, dans lequel les moyens de mise en prise réglables comprennent deux canaux (12) dans la face du dispositif, chaque canal (12) étant adapté pour recevoir une tige filetée (13) de coupe transversale différente.

3. Système de support comprenant une douille filetée (16) comprenant des moyens destinés à fixer la douille à une surface ; une tige filetée complémentaire (13) ; et un dispositif de support selon la revendication 1 ou 2.

4. Procédé de support d'un tuyau (11) à partir d'une tige filetée (13), le procédé consistant à utiliser un dispositif de support de tuyau selon la revendication 1 ou 2, choisir un canal (12) de dimensions en coupe transversale similaires à celles de la tige filetée (13), lequel canal comprend une nervure dentée latérale (25) présentant une pluralité de dents, qui sont sélectionnées pour être de taille et de pas similaires au filetage de la tige (13).
